# EUROPEAN PATENT SPECIFICATION

(11) **EP 4 576 468 B1**
(45) Date of publication and mention of the grant of the patent: **11.11.2026**
(21) Application number: 23871696.3
(22) Date of filing: 30.08.2023
(51) Int. Cl.: H02H 9/04, H02M 7/48, H02H 3/20, H02M 1/32, H02M 5/458, H02H 9/00, H02H 7/122, H02H 9/02

(54) **ELECTRIC CIRCUIT**
ELEKTRISCHE SCHALTUNG
CIRCUIT ÉLECTRIQUE

(30) Priority: 30.09.2022 JP 2022157757
(43) Date of publication of application: 25.06.2025
(73) Proprietor: DAIKIN INDUSTRIES, LTD., Osaka-shi, Osaka 530-0001 (JP)
(72) Inventor: TANIMUKAI, Kazuma, Osaka-shi, Osaka 530-0001 (JP); DOI, Hirotaka, Osaka-shi, Osaka 530-0001 (JP); KONO, Masaki, Osaka-shi, Osaka 530-0001 (JP); TANIGUCHI, Tomoisa, Osaka-shi, Osaka 530-0001 (JP)
(74) Representative: Hoffmann Eitle
(86) International application number: PCT/JP2023/031591
(87) International publication number: WO 2024/070456

(56) References cited:
- EP-A2- 2 071 690
- JP-A- 2004 215 323
- JP-A- 2004 320 851
- JP-A- 2007 166 810
- JP-A- 2015 128 357
- JP-U- H0 391 100

## Description

### TECHNICAL FIELD

The present disclosure relates to an electric circuit including a power source unit and a main circuit unit configured to receive electric power from a power source via the power source unit.

### BACKGROUND ART

Patent Document 1 discloses an electric circuit including a power source unit and a main circuit unit configured to receive electric power from an AC power source via the power source unit. In this electric circuit, the power source unit includes a reactor and a converter circuit, and the main circuit unit includes a capacitor and an inverter circuit.

Patent Document 2 discloses that an overvoltage protection circuit prevents a voltage higher than an allowable voltage value from being supplied to a predetermined to-be-protected circuit. When the detection signal indicates that the detected voltage is no higher than the allowable voltage value, a MOSFET supplies the to-be-protected circuit with the voltage applied to the input end.

Patent Document 3 discloses an overvoltage detection method.

Patent Document 4 relates to provide a small-sized, low-cost over-voltage protection circuit that protects equipment from momentary excessive voltage, and a power conversion device including the same.

### CITATION LIST

### PATENT DOCUMENT

Patent Document 1: Japanese Unexamined Patent Publication No. 2020-124104
Patent Document 2: EP 2 071 690 A2
Patent Document 3: JP H03 91100 U
Patent Document 4: JP 2015 128357 A

### SUMMARY OF THE INVENTION

### TECHNICAL PROBLEM

If lightning strikes, a lightning surge may occur and damage the main circuit unit in the electric circuit disclosed by Patent Document 1.

In view of this issue, the present disclosure has been made to make the main circuit unit configured to receive the electric power from the power source less susceptible to damage caused by the lightning surge.

### SOLUTION TO THE PROBLEM

A first aspect is an electric circuit according to claim 1. The electric circuit includes a power source unit (10) and a main circuit unit (50) configured to receive electric power from a power source (2) via the power source unit (10). The power source unit (10) includes: a bypass path (40, 40a to 40c) configured to allow part of a current including a lightning surge current superimposed on a current from the power source (2) to flow; and an impedance increasing circuit (11) configured to increase an equivalent impedance between the power source (2) and the main circuit unit (50) based on the current flowing through the bypass path (40, 40a to 40c).

The lightning surge current is a current superimposed on a current that flows at a voltage normally supplied from the power source (2). The lightning surge current flows when a voltage of the power source (2) increases in the event of a lightning surge. In the first aspect, when the lightning surge current is superimposed on the current from the power source (2), part of the current including the lightning surge current is allowed to pass through the bypass path (40, 40a to 40c), and the equivalent impedance between the power source (2) and the main circuit unit (50) is increased. This reduces the current flowing from the power source (2) to the main circuit unit (50). Thus, the main circuit unit (50) is less susceptible to damage caused by the lightning surge.

The impedance increasing circuit (11) is configured to increase the impedance using electrical energy sent to the bypass path (40, 40a to 40c) when part of the current including the lightning surge current flows through the bypass path (40, 40a to 40c).

The entry of the lightning surge current to the main circuit unit (50) can be blocked by using the electrical energy of the lightning surge current, and thus the energy can be effectively used.

According to a further aspect, the impedance increasing circuit (11) is configured to generate a voltage between the power source (2) and the main circuit unit (50) in a direction that keeps the current including the lightning surge current from flowing through the main circuit unit (50) based on the current flowing through the bypass path (40, 40a to 40c).

According to the invention, the impedance increasing circuit (11) includes: a main winding (30) provided on a path for supplying the electric power from the power source (2) to the main circuit unit (50); and an auxiliary winding (41) provided on the bypass path (40) and magnetically coupled to the main winding (30), and is configured to generate the voltage by changing a magnetic flux passing through the main winding (30) by passing part of the current including the lightning surge current through the auxiliary winding (41).

In another aspect, if the lightning surge current is applied between any two lines from the power source (2), the equivalent impedance between the power source (2) and the main circuit unit (50) can be increased to reduce the voltage increase of the main circuit unit (50).

In a further aspect, the bypass path (40, 40a to 40c) is provided with a surge absorber (42) connected in series to the auxiliary winding (41).

In this aspect, the surge absorber (42) regulates the flow of the current through the bypass path (40, 40a to 40c) when no lightning surge occurs. On the other hand, when the lightning surge occurs, the surge absorber (42) is short-circuited, and the current flows through the bypass path (40, 40a to 40c). Thus, there is no need to cause a computer to control whether or not to pass the current through the bypass path (40, 40a to 40c), and a delay time from the occurrence of the lightning surge to the flow of the current through the bypass path (40, 40a to 40c) can be shortened.

In a further aspect, the main winding (30) and the auxiliary winding (41) have polarities in the same direction.

In this aspect, when the current flows through the bypass path (40, 40a to 40c), the main winding (30) can generate a voltage in a direction that keeps the current including the lightning surge current from flowing through the main circuit unit (50).

In a further aspect, the power source (2) is an AC power source, the power source unit (10) includes a rectifier circuit (20) configured to rectify an alternating current outputted from the power source (2), and the main circuit unit (50) includes an inverter circuit (60) configured to convert a direct current outputted from the rectifier circuit (20) to an alternating current by a switching operation and a capacitor (70) connected between input nodes (60a, 60b) of the inverter circuit (60) and configured to allow an output voltage of the rectifier circuit (20) to pulsate.

In this aspect, when the lightning surge current is superimposed on the current from the power source (2), the current flowing from the power source (2) to the capacitor (70) can be reduced to reduce a voltage increase of the capacitor (70). Thus, the capacitor (70) can be reduced in size.

### BRIEF DESCRIPTION OF THE DRAWINGS

FIG. 1 is a circuit diagram showing a configuration of a power converter as an electric circuit according to a first embodiment of the present disclosure.
FIG. 2 is a view corresponding to FIG. 1, illustrating a comparative example.
FIG. 3 is a chart showing a voltage across a bypass path, an input voltage of a main circuit unit, a voltage in a main winding, and an input current of the main circuit unit measured in the comparative example.
FIG. 4 is a timing chart showing a voltage across a bypass path, an input voltage of a main circuit unit, a voltage in a main winding, an input current of the main circuit unit, and a voltage in an auxiliary winding measured in the first embodiment with solid lines, and the voltage across the bypass path, the input voltage of the main circuit unit, the voltage in the main winding, and the input current of the main circuit unit measured in the comparative example with broken lines.
FIG. 5 is a view corresponding to FIG. 1, illustrating a variation of the first embodiment.
FIG. 6 is a view corresponding to FIG. 1, illustrating a second embodiment.
FIG. 7 is a view corresponding to FIG. 1, illustrating a third embodiment.
FIG. 8 is a view corresponding to FIG. 1, illustrating a variation of the third embodiment.
FIG. 9 is a view corresponding to FIG. 1, illustrating a fourth embodiment.

### DESCRIPTION OF EMBODIMENTS

Embodiments of the present disclosure will be described in detail with reference to the drawings. The following embodiments are merely exemplary ones in nature, and are not intended to limit the scope, application, or use of the present invention.

### «First Embodiment»

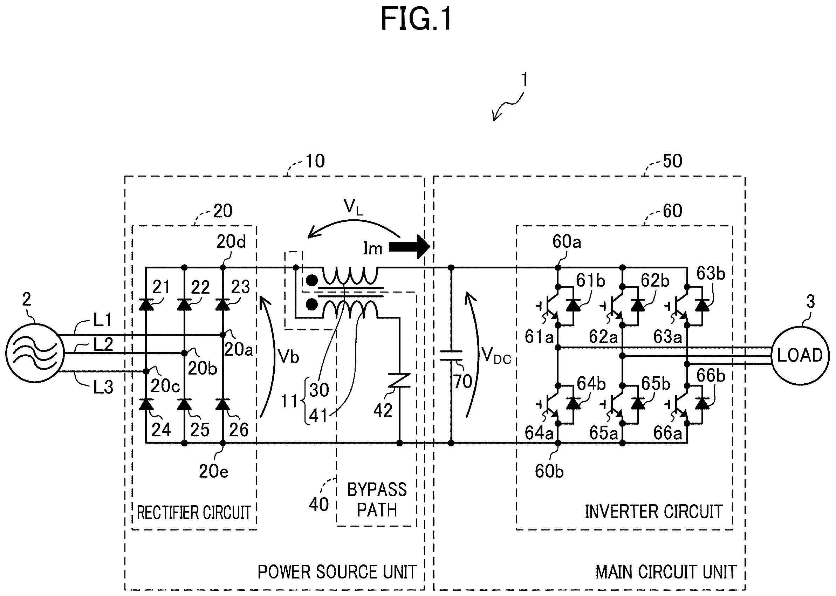

FIG. 1 shows a power converter (1) which is an electric circuit according to a first embodiment of the present disclosure. The power converter (1) converts an alternating current inputted from a power source (2) into an alternating current having desired frequency and voltage and supplies the alternating current to a load (3). The power source (2) is a three-phase AC power source. The load (3) is a motor.

The power converter (1) includes a power source unit (10), a main circuit unit (50) configured to receive electric power from the power source (2) via the power source unit (10), and a control device (not shown).

The power source unit (10) includes a rectifier circuit (20), a main winding (30), and a bypass path (40).

The rectifier circuit (20) rectifies a three-phase alternating current outputted from the power source (2) to first to third power lines (L1 to L3) into a direct current. The rectifier circuit (20) includes first to third input terminals (20a to 20c) connected to the first to third power lines (L1 to L3), and first and second output terminals (20d, 20e) for outputting a direct current. Specifically, the rectifier circuit (20) is a full-wave rectifier circuit. The rectifier circuit (20) includes six diodes (21 to 26) that serve as bridge-connected rectifier elements. The diodes (21 to 26) have cathodes directed toward the first output terminal (20d) and anodes directed toward the second output terminal (20e).

The main winding (30) is provided on a path for supplying the electric power from the power source (2) to the main circuit unit (50). Specifically, one end of the main winding (30) is connected to the first output terminal (20d) of the rectifier circuit (20), and the other end of the main winding (30) is connected to the main circuit unit (50) which will be described later in detail. That is, the main winding (30) is connected in series to the rectifier circuit (20) and the main circuit unit (50).

Both ends of the bypass path (40) are connected to the first and second output terminals (20d, 20e) of the rectifier circuit (20). In the bypass path (40), an auxiliary winding (41) magnetically coupled to the main winding (30) and a varistor (42) that serves as a surge absorber connected in series to the auxiliary winding (41) are provided in order from the first output terminal (20d). The main winding (30) and the auxiliary winding (41) have polarities in the same direction.

The main winding (30) and the auxiliary winding (41) constitute an impedance increasing circuit (11) configured to increase an equivalent impedance between the power source (2) and the main circuit unit (50) based on the current flowing through the bypass path (40). The equivalent impedance means |Vb|/|Im|, where Vb is a voltage across the bypass path (40) and Im is a current flowing from the power source unit (10) to the main circuit unit (50).

The main circuit unit (50) includes an inverter circuit (60) and a capacitor (70).

The inverter circuit (60) converts the direct current outputted from the rectifier circuit (20) into a three-phase alternating current by a switching operation and supplies the three-phase alternating current to the load (3). The inverter circuit (60) is controlled by a control device (not shown) by a pulse width modulation (PWM) method. Specifically, the inverter circuit (60) includes six switching elements (61a to 66a) and six freewheeling diodes (61b to 66b). The six switching elements (61a to 66a) are bridge-connected. More specifically, the inverter circuit (60) includes three switching legs connected between first and second input nodes (60a, 60b). Each switching leg is formed by connecting two of the switching elements (61a to 66a) in series. The first input node (60a) is connected to the other end of the main winding (30), and the second input node (60b) is connected to the second output terminal (20e) of the rectifier circuit (20).

In each of the three switching legs, a midpoint between the switching element (61a to 63a) of the upper arm and the switching element (64a to 66a) of the lower arm is connected to a coil of each phase (a u-phase coil, a v-phase coil, or a w-phase coil) of the load (3). Each of the switching elements (61a to 66a) is connected to a corresponding one of the freewheeling diodes (61b to 66b) in inverse parallel. Each of the switching elements (61a to 66a) is constituted of an insulated gate bipolar transistor (IGBT). However, the switching elements (61a to 66a) may be constituted of power metal oxide semiconductor field effect transistors (MOSFETs) including wide bandgap semiconductors such as silicon carbide (SiC) and gallium nitride (GaN).

The capacitor (70) is connected between the first and second input nodes (60a, 60b) of the inverter circuit (60). The capacitor (70) is a film capacitor or a ceramic capacitor. The film capacitor and the ceramic capacitor generally have a smaller capacitance than electrolytic capacitors, and thus the capacitor (70) does not sufficiently smooth the output voltage of the rectifier circuit (20). In other words, the capacitor (70) allows the output voltage of the rectifier circuit (20) to pulsate. Thus, the voltage between the first and second input nodes (60a, 60b) of the inverter circuit (60) has a pulsating component. The rectifier circuit (20) performs full-wave rectification, and thus the frequency of the pulsating component is 2N times the frequency of the AC voltage outputted from the power source (2) (N is the number of phases of the power source (2)).

Here, the inductance of the main winding (30) and the capacitance of the capacitor (70) are set to meet the following expression 1, where L (H) is the inductance of the main winding (30), fc (Hz) is the carrier frequency of the PWM control of the inverter circuit (60), C (F) is the capacitance of the capacitor (70), and the value of a constant K is 1/4.
[Math 1] $\frac{1}{2 π \sqrt{LC}} ≦ K ⋅ fc$ (Expression 1)

This allows the main winding (30) and the capacitor (70) to absorb switching noise generated in the inverter circuit (60). The switching elements (61a to 66a) may be power MOSFETs which are made of silicon carbide or gallium nitride and can perform high speed switching. This can increase the carrier frequency fc, and can reduce the inductance of the main winding (30) and the capacitance of the capacitor (70).

The capacitance of the capacitor (70) is set to meet the following expression 2, where Vac (V) is the voltage of the power source (2) and Pmax (W) is the maximum power consumption of the load (3).
[Math 2] $C \leq 350 \times {10}^{- 6} \times \frac{Pmax}{{Vac}^{2}}$ (Expression 2)

Setting the capacitance of the capacitor (70) in this manner can reduce the fifth and seventh harmonics from the rectifier circuit (20).

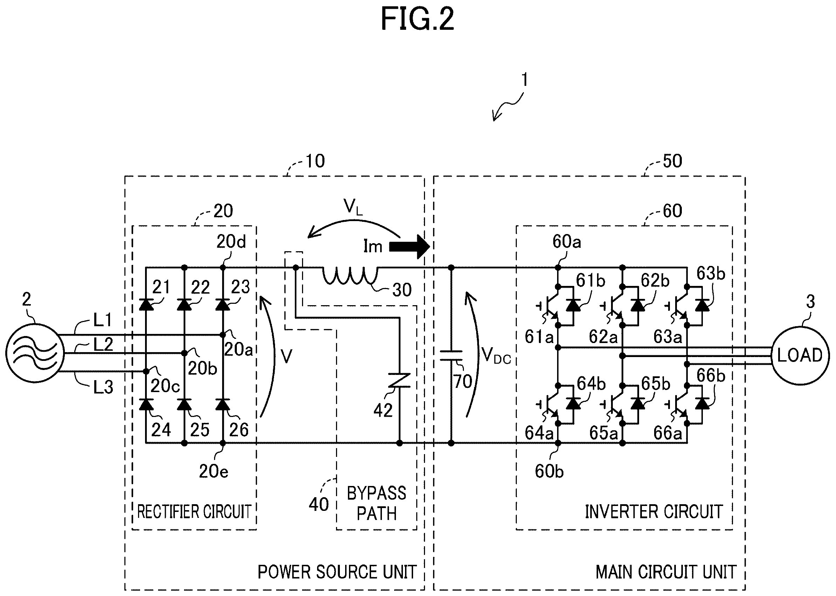

FIG. 2 shows a power converter (1) of a comparative example. In this comparative example, the bypass path (40) of the power converter (1) has no auxiliary winding (41). The other configuration of the comparative example is the same as, or similar to, that of the first embodiment.

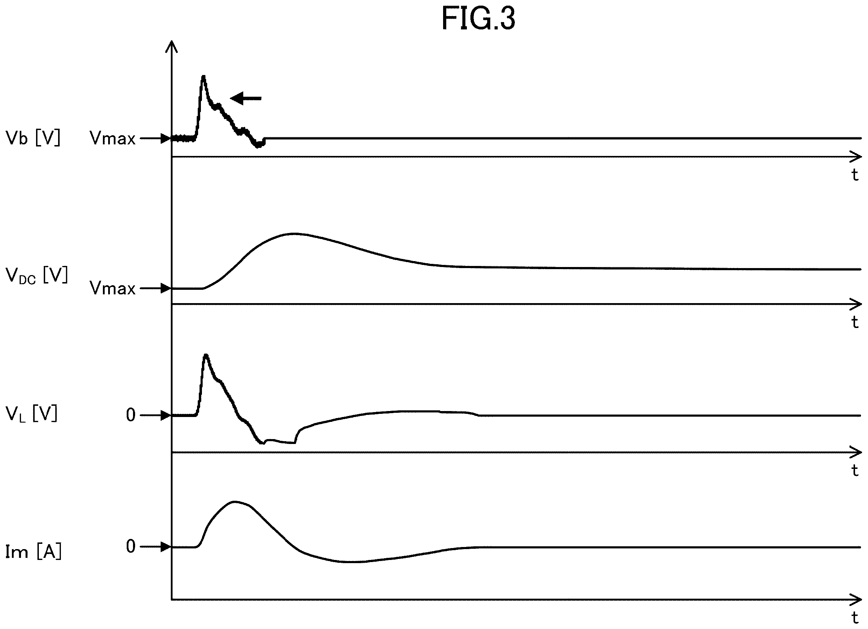

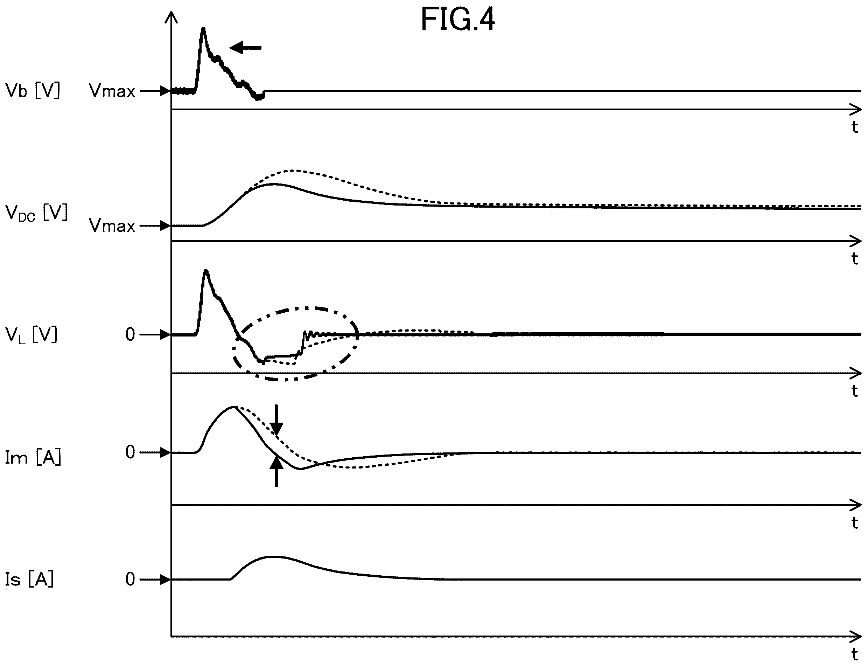

FIG. 3 shows the voltage Vb across the bypass path (40), the input voltage VDC of the main circuit unit (50), the voltage VL in the main winding (30), and the current Im in the main winding (30) measured in the comparative example in order from the top. FIG. 4 shows the voltage Vb across the bypass path (40), the input voltage VDC of the main circuit unit (50), the voltage VL in the main winding (30), the current Im in the main winding (30), and the current Is in the auxiliary winding (41) measured in the first embodiment in order from the top with solid lines. FIG. 4 also shows the voltage Vb across the bypass path (40), the input voltage VDC of the main circuit unit (50), the voltage VL in the main winding (30), and the current Im in the main winding (30) measured in the comparative example with broken lines. The voltages and currents shown in FIGS. 3 and 4 are those obtained when the switching of the switching elements (61a to 66a) of the inverter circuit (60) is stopped by the control of the control device (not shown). In FIGS. 3 and 4, Vmax represents a peak value of the power source voltage supplied by the power source (2) when no lightning surge occurs.

If the lightning surge occurs in the circuit of the first embodiment, the voltage Vb across the bypass path (40) increases as indicated by an arrow in FIG. 4. In response to the voltage increase, the current Im including the lightning surge current flows through the main winding (30), and electric charges gradually build up in the capacitor (70), increasing the input voltage VDC of the main circuit unit (50). The lightning surge current is a current superimposed on a current that flows at a voltage normally supplied from the power source (2). The lightning surge current flows when the voltage of the power source (2) increases in the event of the lightning surge. Further, part of the current including the lightning surge current superimposed on the current from the power source (2) flows as the current Is through the bypass path (40) including the auxiliary winding (41), reducing the current flowing from the power source (2) and the power source unit (10) to the main circuit unit (50). When the current Is flows through the bypass path (40), the auxiliary winding (41) changes the magnetic flux passing through the main winding (30) using the electrical energy sent to the bypass path (40), and generates a voltage in the main winding (30), that is, between the power source (2) and the main circuit unit (50), in a direction that keeps the current including the lightning surge current from flowing through the main circuit unit (50). This increases an equivalent impedance between the power source (2) and the main circuit unit (50). Thus, when the current Is flows through the bypass path (40) in the event of the lightning surge, the voltage VL in the main winding (30) is higher in the first embodiment than that in the comparative example as can be seen in the part enclosed by the two dot chain line in FIG. 4. As indicated by the arrow in FIG. 4, the current Im in the main winding (30) is smaller than that in the comparative example. As a result, the increase of the input voltage VDC of the main circuit unit (50) can be reduced as compared with the comparative example. Thus, the main circuit unit (50) is less susceptible to damage caused by the lightning surge than in the comparative example.

In the first embodiment, when the lightning surge current is superimposed on the current from the power source (2), the current flowing from the power source (2) to the main winding (30) and the capacitor (70) can be reduced as compared with the comparative example. Thus, the main winding (30) and the capacitor (70) can be reduced in size as compared with the comparative example.

In the first embodiment, the entry of the lightning surge current into the main circuit unit (50) can be blocked by using the electrical energy of the lightning surge current. Thus, the energy can be effectively used.

Further, the varistor (42) is provided in the bypass path (40) of the first embodiment, regulating the current flowing through the bypass path (40) when no lightning surge occurs. In the event of the lightning surge, the surge absorber (42) is short-circuited to allow the current to flow through the bypass path (40). Thus, there is no need to cause a computer to control whether or not to pass the current through the bypass path (40), and a delay time from the occurrence of the lightning surge to the flow of the current through the bypass path (40) can be shortened.

FIGS. 3 and 4 show the voltages and the currents while the switching of the switching elements (61a to 66a) is stopped. While the switching of the switching elements (61a to 66a) is stopped, the charges in the capacitor (70) do not flow to the load (3), increasing the input voltage VDC of the main circuit unit (50) more significantly. However, the current flowing from the power source (2) to the main winding (30) and the capacitor (70) in the event of the lightning surge can be effectively reduced also when the switching elements (61a to 66a) are caused to perform the switching operation to supply the current to the load (3).

### «Variation of First Embodiment»

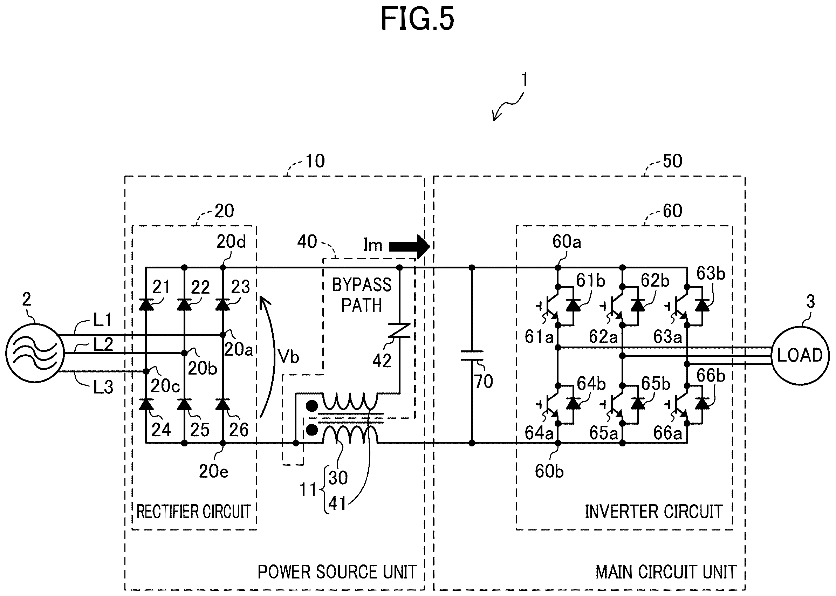

FIG. 5 shows a power converter (1) according to a variation of the first embodiment of the present disclosure. In this variation, one end of the main winding (30) is connected to the second output terminal (20e) of the rectifier circuit (20), and the other end of the main winding (30) is connected to the second input node (60b) of the inverter circuit (60). The first input node (60a) of the inverter circuit (60) is connected to the first output terminal (20d) of the rectifier circuit (20). The bypass path (40) is provided with an auxiliary winding (41) and a varistor (42) arranged in order from the second output terminal (20e).

This variation is configured in the same manner as the first embodiment except for these features. Thus, the same components will be indicated by the same reference characters and will not be described in detail.

«Second Embodiment»

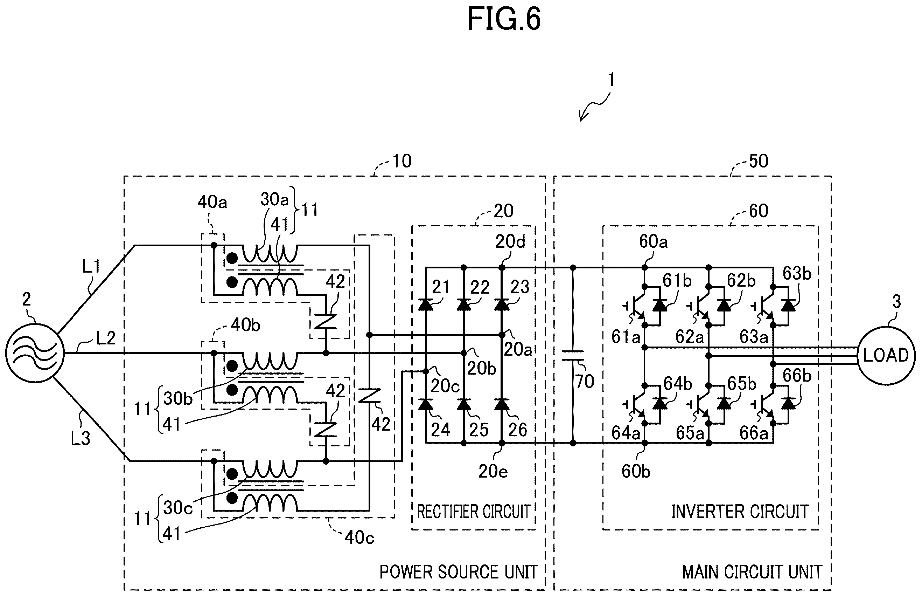

FIG. 6 shows a power converter (1) according to a second embodiment of the present disclosure. According to the second embodiment, first to third main windings (30a to 30c) and first to third bypass paths (40a to 40c) are provided between the power source (2) and the rectifier circuit (20).

Specifically, the first main winding (30a) is provided between the power source (2) and the first input terminal (20a) of the rectifier circuit (20), that is, on the first power line (L1).

The second main winding (30b) is provided between the power source (2) and the second input terminal (20a) of the rectifier circuit (20), that is, on the second power line (L2).

The third main winding (30c) is provided between the power source (2) and the third input terminal (20c) of the rectifier circuit (20), that is, on the third power line (L3).

The bypass path (40) includes the first to third bypass paths (40a to 40c).

One end of the first bypass path (40a) is connected to the first power line (L1) at a position closer to the power source (2) than the first main winding (30a). The other end of the first bypass path (40a) is connected to the second power line (L2) at a position closer to the rectifier circuit (20) than the second main winding (30b). The auxiliary winding (41) and varistor (42) of the first bypass path (40a) are connected in order from the first power line (L1).

One end of the second bypass path (40b) is connected to the second power line (L2) at a position closer to the power source (2) than the second main winding (30b). The other end of the second bypass path (40b) is connected to the third power line (L3) at a position closer to the rectifier circuit (20) than the third main winding (30c). The auxiliary winding (41) and varistor (42) of the second bypass path (40b) are connected in order from the second power line (L2).

One end of the third bypass path (40c) is connected to the third power line (L3) at a position closer to the power source (2) than the third main winding (30c). The other end of the third bypass path (40c) is connected to the first power line (L1) at a position closer to the rectifier circuit (20) than the first main winding (30a). The auxiliary winding (41) and varistor (42) of the third bypass path (40c) are connected in order from the third power line (L3).

The second embodiment is configured in the same manner as the first embodiment except for these features. Thus, the same components will be indicated by the same reference characters and will not be described in detail.

### «Third Embodiment»

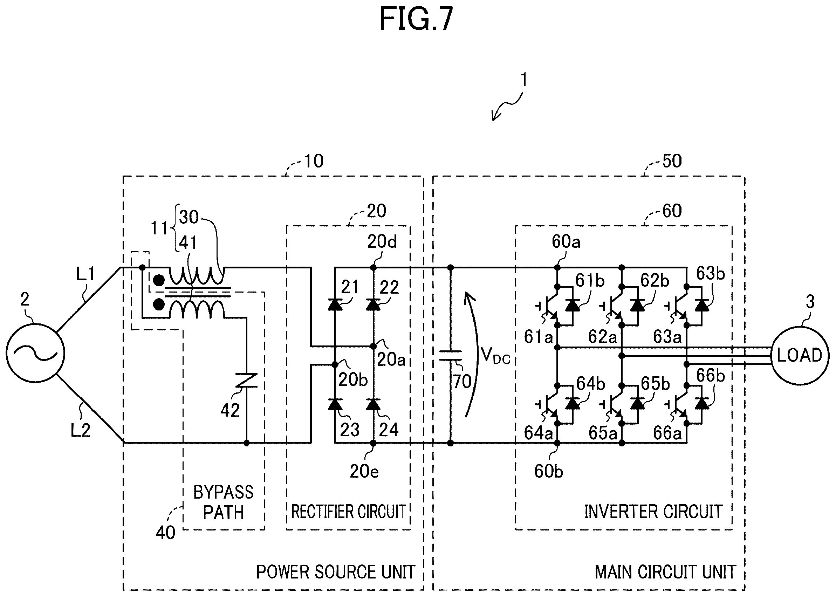

FIG. 7 shows a power converter (1) according to a third embodiment of the present disclosure. In the third embodiment, the power source (2) is a single-phase AC power source. Thus, the rectifier circuit (20) includes only the first and second input terminals (20a, 20b) as the input terminals connected to the first and second power lines (L1, L2). The rectifier circuit (20) has four diodes (21 to 24). The main winding (30) is provided between the power source (2) and the rectifier circuit (20). That is, the rectifier circuit (20) is connected to the power source (2) via the main winding (30).

Specifically, the main winding (30) is provided on the first power line (L1), that is, between the power source (2) and the first input terminal (20a) of the rectifier circuit (20).

One end of the bypass path (40) is connected to the first power line (L1) at a position closer to the power source (2) than the main winding (30). The other end of the bypass path (40) is connected to the second power line (L2). The auxiliary winding (41) and the varistor (42) are connected in order from the first power line (L1).

The capacitance of the capacitor (70) is set to allow the output voltage of the rectifier circuit (20) to pulsate with the maximum value twice or more the minimum value.

The third embodiment is configured in the same manner as the first embodiment except for these features. Thus, the same components will be indicated by the same reference characters and will not be described in detail.

### «Variation of Third Embodiment»

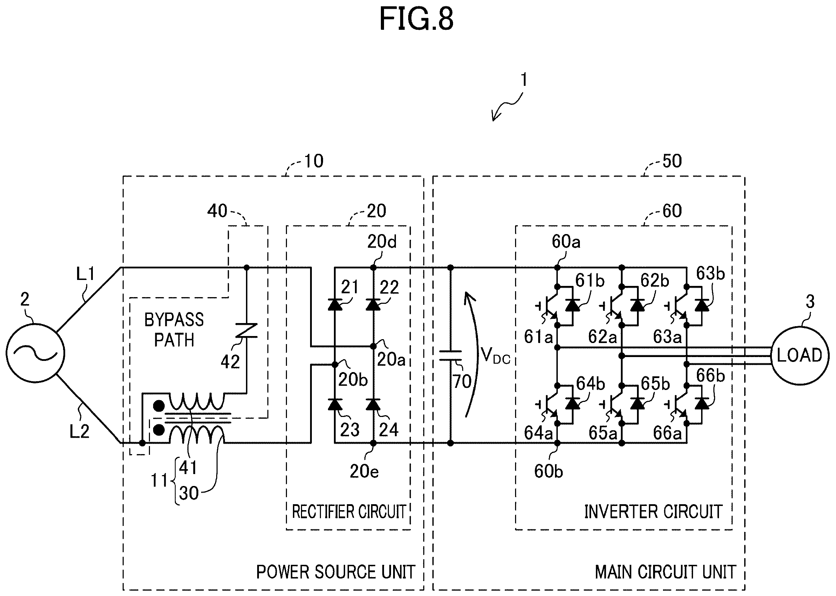

FIG. 8 shows a power converter (1) according to a variation of the third embodiment of the present disclosure. In this variation, the main winding (30) is provided on the second power line (L2), that is, between the power source (2) and the second input terminal (20b) of the rectifier circuit (20). One end of the bypass path (40) is connected to the second power line (L2) at a position closer to the power source (2) than the main winding (30). The other end of the bypass path (40) is connected to the first power line (L1). The auxiliary winding (41) and the varistor (42) are connected in order from the second power line (L2).

This variation is configured in the same manner as the third embodiment except for these features. Thus, the same components will be indicated by the same reference characters and will not be described in detail.

### «Fourth Embodiment»

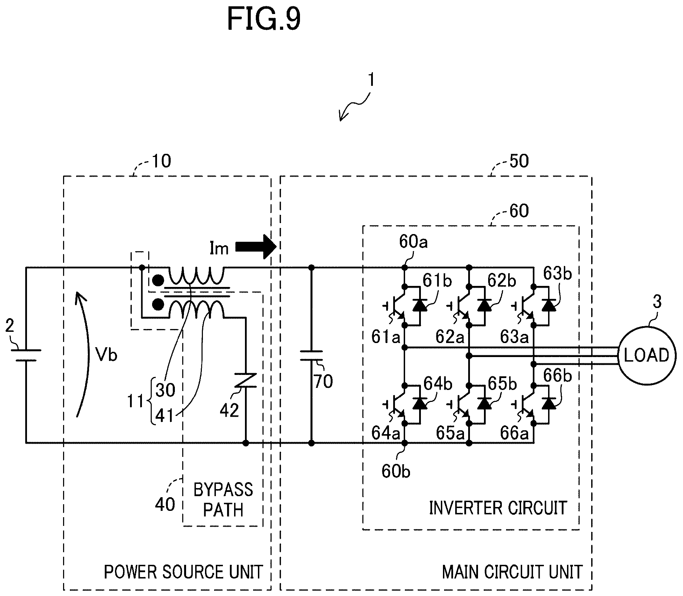

FIG. 9 shows a power converter (1) according to a fourth embodiment of the present disclosure. The power source (2) of the fourth embodiment is a DC power source. The power source unit (10) has no rectifier circuit (20).

The fourth embodiment is configured in the same manner as the first embodiment except for these features. Thus, the same components will be indicated by the same reference characters and will not be described in detail.

The first embodiment may be modified by using a single-phase AC power source as the power source (2) and replacing the rectifier circuit (20) with the rectifier circuit (20) of the third embodiment, i.e., the rectifier circuit (20) including the four diodes (21 to 24).

In the first to fourth embodiments and the variations of the first and third embodiments, the inverter circuit (60) may be replaced with a different power conversion circuit such as a DC-DC converter capable of performing power conversion such as boosting or stepping down a DC voltage by a switching operation. The power conversion circuit may constitute the main circuit unit (50).

In the first to fourth embodiments and the variations of the first and third embodiments, the main circuit unit (50) has the power conversion function by the inverter circuit (60), but the main circuit unit (50) may have no power conversion function.

In the first to fourth embodiments and the variations of the first and third embodiments, the diodes (21 to 26) may be replaced with IGBTs or power MOSFETs including wide bandgap semiconductors such as silicon carbide or gallium nitride in part or all of the rectifier circuit (20).

It will be understood that the embodiments and variations described above can be modified with various changes in form and details without departing from the scope of the claims. The above embodiments and variations may be appropriately combined or replaced as long as the functions of the target of the present disclosure are not impaired.

### INDUSTRIAL APPLICABILITY

As can be seen in the foregoing, the present disclosure is useful as an electric circuit including a power source unit and a main circuit unit configured to receive electric power from a power source via the power source unit.

### DESCRIPTION OF REFERENCE CHARACTERS

- 1: Power Converter
- 2: Power Source
- 10: Power Source Unit
- 11: Impedance Increasing Circuit
- 20: Rectifier Circuit
- 30: Main Winding
- 40: Bypass Path
- 41: Auxiliary Winding
- 42: Varistor (Surge Absorber)
- 50: Main Circuit Unit
- 60: Inverter Circuit
- 60a: First Input Node
- 60b: Second Input Node
- 70: Capacitor

## Claims

1. An electric circuit including a power source unit (10) and a main circuit unit (50) configured to receive electric power from a power source (2) via the power source unit (10), wherein
the power source unit (10) includes:
a bypass path (40, 40a to 40c) configured to allow part of a current including a lightning surge current superimposed on a current from the power source (2) to flow; and
an impedance increasing circuit (11) configured to increase an equivalent impedance between the power source (2) and the main circuit unit (50) based on the current flowing through the bypass path (40, 40a to 40c), wherein the impedance increasing circuit (11) includes: a main winding (30) provided on a path for supplying the electric power from the power source (2) to the main circuit unit (50); and an auxiliary winding (41) provided on the bypass path (40) and magnetically coupled to the main winding (30), and is configured to generate a voltage between the power source (2) and main circuit unit (50) by changing a magnetic flux passing through the main winding (30) by passing part of the current including the lightning surge current through the auxiliary winding (41).

2. The electric circuit of claim 1, wherein the impedance increasing circuit (11) is configured to increase the equivalent impedance using electrical energy sent to the bypass path (40, 40a to 40c) when part of the current including the lightning surge current flows through the bypass path (40, 40a to 40c).

3. The electric circuit of claim 1 or 2, wherein the impedance increasing circuit (11) is configured to generate the voltage between the power source (2) and the main circuit unit (50) in a direction that keeps the current including the lightning surge current from flowing through the main circuit unit (50) based on the current flowing through the bypass path (40, 40a to 40c).

4. The electric circuit of claim 1, wherein
the bypass path (40, 40a to 40c) is provided with a surge absorber (42) connected in series to the auxiliary winding (41).

5. The electric circuit of claim 1 or 4, wherein
the main winding (30) and the auxiliary winding (41) have polarities in the same direction.

6. The electric circuit of any one of claims 1 to 5, wherein
the power source (2) is an AC power source,
the power source unit (10) includes:
a rectifier circuit (20) configured to rectify an alternating current outputted from the power source (2), and
the main circuit unit (50) includes
an inverter circuit (60) configured to convert a direct current outputted from the rectifier circuit (20) to an alternating current by a switching operation and
a capacitor (70) connected between input nodes (60a, 60b) of the inverter circuit (60) and configured to allow an output voltage of the rectifier circuit (20) to pulsate.

## Patentansprüche

1. Elektrische Schaltung, die eine Stromversorgungseinheit (10) und eine Hauptschaltungseinheit (50) einschließt, die ausgebildet ist, um von einer Stromquelle (2) über die Stromversorgungseinheit (10) elektrische Leistung zu empfangen, wobei
die Stromversorgungseinheit (10) einschließt:
einen Umgehungspfad (40, 40a bis 40c), der ausgebildet ist, dass er das Fließen eines Teils eines Stroms ermöglicht, der einen einem Strom von der Stromquelle (2) überlagerten Blitzstoßstrom einschließt; und
eine Impedanzerhöhungsschaltung (11), die ausgebildet ist, um eine äquivalente Impedanz zwischen der Stromquelle (2) und der Hauptschaltungseinheit (50) auf der Grundlage des durch den Umgehungspfad (40, 40a bis 40c) fließenden Stroms zu erhöhen, wobei die Impedanzerhöhungsschaltung (11) einschließt: eine Hauptwicklung (30), die auf einem Pfad zum Zuführen der elektrischen Leistung von der Stromquelle (2) zu der Hauptschaltungseinheit (50) bereitgestellt ist; und eine Hilfswicklung (41), die auf dem Umgehungspfad (40) bereitgestellt und mit der Hauptwicklung (30) magnetisch gekoppelt ist, und ausgebildet ist, um eine Spannung zwischen der Stromquelle (2) und der Hauptschaltungseinheit (50) durch Ändern eines durch die Hauptwicklung (30) hindurchgehenden magnetischen Flusses durch Hindurchleiten eines Teils des Stroms, der den Blitzstoßstrom einschließt, durch die Hilfswicklung (41) zu erzeugen.

2. Elektrische Schaltung nach Anspruch 1, wobei
die Impedanzerhöhungsschaltung (11) ausgebildet ist, um die äquivalente Impedanz unter Verwendung von dem Umgehungspfad (40, 40a bis 40c) zugeführter elektrischer Energie zu erhöhen, wenn ein Teil des Stroms, einschließlich des Blitzstoßstroms, durch den Umgehungspfad (40, 40a bis 40c) fließt.

3. Elektrische Schaltung nach Anspruch 1 oder 2, wobei
die Impedanzerhöhungsschaltung (11) ausgebildet ist, um die Spannung zwischen der Stromquelle (2) und der Hauptschaltungseinheit (50) auf der Grundlage des durch den Umgehungspfad (40, 40a bis 40c) fließenden Stroms in einer Richtung zu erzeugen, die bewirkt, dass der Strom, der den Blitzstoßstrom einschließt, nicht durch die Hauptschaltungseinheit (50) fließt.

4. Elektrische Schaltung nach Anspruch 1, wobei
der Umgehungspfad (40, 40a bis 40c) mit einem Überspannungsableiter (42) bereitgestellt ist, der in Reihe mit der Hilfswicklung (41) geschaltet ist.

5. Elektrische Schaltung nach Anspruch 1 oder 4, wobei
die Hauptwicklung (30) und die Hilfswicklung (41) Polaritäten in derselben Richtung aufweisen.

6. Elektrische Schaltung nach einem der Ansprüche 1 bis 5, wobei
die Stromquelle (2) eine Wechselstromquelle ist,
die Stromversorgungseinheit (10) einschließt:
eine Gleichrichterschaltung (20), die ausgebildet ist, um einen von der Stromquelle (2) ausgegebenen Wechselstrom gleichzurichten, und
die Hauptschaltungseinheit (50) einschließt
eine Wechselrichterschaltung (60), die ausgebildet ist, um einen von der Gleichrichterschaltung (20) ausgegebenen Gleichstrom durch einen Schaltvorgang in einen Wechselstrom umzuwandeln, und
einen Kondensator (70), der zwischen Eingangsknoten (60a, 60b) der Wechselrichterschaltung (60) angeschlossen und ausgebildet ist, um eine Ausgangsspannung der Gleichrichterschaltung (20) pulsieren zu lassen.

## Revendications

1. Circuit électrique incluant une unité (10) de source d'énergie et une unité (50) de circuit principal configurée pour recevoir de l'énergie électrique à partir d'une source d'énergie (2) par l'intermédiaire de l'unité (10) de source d'énergie, dans lequel
l'unité (10) de source d'énergie inclut :
un trajet de dérivation (40, 40a à 40c) configuré pour permettre à une partie d'un courant incluant un courant de surtension de foudre superposé à un courant provenant de la source d'énergie (2) de circuler ; et
un circuit (11) d'augmentation d'impédance configuré pour augmenter une impédance équivalente entre la source d'énergie (2) et l'unité (50) de circuit principal sur la base du courant circulant à travers le trajet de dérivation (40, 40a à 40c), dans lequel le circuit (11) d'augmentation d'impédance inclut : un enroulement principal (30) prévu sur un trajet pour fournir l'énergie électrique provenant de la source d'énergie (2) à l'unité (50) de circuit principal ; et un enroulement auxiliaire (41) prévu sur le trajet de dérivation (40) et couplé magnétiquement à l'enroulement principal (30), et est configuré pour générer une tension entre la source d'énergie (2) et l'unité (50) de circuit principal en modifiant un flux magnétique traversant l'enroulement principal (30) par passage d'une partie du courant incluant le courant de surtension de foudre à travers l'enroulement auxiliaire (41).

2. Circuit électrique selon la revendication 1, dans lequel
le circuit (11) d'augmentation d'impédance est configuré pour augmenter l'impédance équivalente en utilisant de l'énergie électrique envoyée au trajet de dérivation (40, 40a à 40c) lorsqu'une partie du courant incluant le courant de surtension de foudre circule à travers le trajet de dérivation (40, 40a à 40c).

3. Circuit électrique selon la revendication 1 ou la revendication 2, dans lequel
le circuit (11) d'augmentation d'impédance est configuré pour générer la tension entre la source d'énergie (2) et l'unité (50) de circuit principal dans un sens qui empêche le courant incluant le courant de surtension de foudre de circuler à travers l'unité (50) de circuit principal sur la base du courant circulant à travers le trajet de dérivation (40, 40a à 40c).

4. Circuit électrique selon la revendication 1, dans lequel
le trajet de dérivation (40, 40a à 40c) est prévu avec un parasurtenseur (42) connecté en série à l'enroulement auxiliaire (41).

5. Circuit électrique selon la revendication 1 ou la revendication 4, dans lequel
l'enroulement principal (30) et l'enroulement auxiliaire (41) présentent des polarités dans le même sens.

6. Circuit électrique selon l'une quelconque des revendications 1 à 5, dans lequel
la source d'énergie (2) est une source d'énergie en courant alternatif,
l'unité (10) de source d'énergie inclut :
un circuit redresseur (20) configuré pour redresser un courant alternatif délivré par la source d'énergie (2), et
l'unité (50) de circuit principal inclut
un circuit onduleur (60) configuré pour convertir un courant continu délivré par le circuit redresseur (20) en un courant alternatif par une opération de commutation et
un condensateur (70) connecté entre des nœuds d'entrée (60a, 60b) du circuit onduleur (60) et configuré pour permettre à une tension de sortie du circuit redresseur (20) de présenter des pulsations.
